# EUROPÄISCHE PATENTANMELDUNG

(11) **EP 1 013 173 A1**
(43) Veröffentlichungstag der Anmeldung: **28.06.2000**
(21) Anmeldenummer: 99125301.4
(22) Anmeldetag: 17.12.1999
(51) Int. Cl.: A22C 13/00

(54) **Füllfertiger Kunststoffdarm**

(30) Priorität: 24.12.1998 DE 19860142
(71) Anmelder: Wolff Walsrode AG, 29655 Walsrode (DE)
(72) Erfinder: Krallmann, Anton, 29683 Fallingbostel (DE); Pophusen, Dirk, 51373 Leverkusen (DE); Brauer, Oke, Dr., 29664 Walsrode (DE)
(74) Vertreter: Pettrich, Klaus-Günter, Dr.

(57) **Zusammenfassung**

Schlauchfolie, die biaxial gereckt, mindestens dreischichtig aufgebaut, schrumpfbar und auf beiden Seiten (innen und außen) eine polyamidbasierte und in der Mitte eine wassersperrenden Schicht besitzt, zwischen Innenschicht und/oder Außenschicht und Mittelschicht gegebenenfalls vorzugsweise eine oder auch mehrere weitere Schicht(en) aufweisen kann und mittels einer vorangegangenen Sprühbefeuchtung und einer Raffung füllfertig füllfertig konditioniert ist, Verfahren zu ihrer Herstellung und ihre Verwendung als Kunstdarm.

## Beschreibung

Die vorliegende Erfindung betrifft eine geraffte, füllfertig konditionierte mehrschichtige, biaxial gereckte, schrumpffähige, polyamidbasierte Schlauchfolie zur Umhüllung von in flüssigen oder pastösen Zustand abgepackten Füllgütern, bevorzugt für Wurstbrät.

Die Entwicklung im Bereich künstlicher Wursthüllen ist gekennzeichnet durch das Bestreben Produkte bereitzustellen, die den veränderten Anforderungen der fleischverarbeitenden Industrie im Hinblick auf Ökonomie und Ökologie gerecht werden.

Bei der Brüh- und Kochwurstherstellung haben sich mehrschichtige, biaxial gereckte Kunststoffhüllen auf der Basis Polyamid (PA) in Verbindung mit anderen Kunststoffen in vielerlei Hinsicht seit Jahren bewährt.

Unter der biaxialen Reckung versteht der Fachmann die Quer- und Längsverstreckung des thermoplastischen Extrudates bei Temperaturen zwischen Glasübergangstemperatur und Schmelzetemperatur der polymeren Werkstoffe. Die biaxiale Reckung erfolgt üblicherweise mittels einer mit einem Gas- oder Fluiddruckpolster gefüllten Blase, die zwischen zwei mit unterschiedlich hohen Umfangsgeschwindigkeiten laufenden Walzenpaaren gas- bzw. fluiddicht eingeschlossenen ist. Während der Verstreckung richten sich die Moleküle des im Festkörperzustand befindlichen Folienschlauches derart aus, dass der Elastizitätmodul und die Festigkeiten sowohl in Quer- als auch in Längsrichtung in erheblichen Maße gesteigert werden. Im Anschluß an die Verstreckung schließt sich meist eine weitere Temperaturbehandlung an.

In der DE 43 39 337 wird eine fünfschichtige, biaxial verstreckte Schlauchfolie zur Verpackung und Umhüllung von Lebensmitteln beschrieben. Diese Hülle ist dadurch gekennzeichnet, dass sie aus einer inneren und äußeren Schicht aus dem gleichen Polyamidmaterial und einer mittleren Polyolefinschicht sowie zwei aus dem gleichen Material bestehenden Haftvermittlerschichten aufgebaut ist.

In der EP 530 538 wird eine fünfschichtig coextrudierte biaxial gereckte Schlauchfolie mit mindestens 3 Polyamidschichten beschrieben, wobei zwischen den innen und außenliegenden Polyamidschichten Polymerschichten mit wasser- und sauerstoffsperrenden Charakter eingebunden sind.

Für die fleischverarbeitende Industrie ist von besondere Interesse die z. B. oben genannten Schlauchfolien mit hoher Effizienz zu verarbeiten. Aus diesem Grund werden die Schlauchfolien einem Raffprozeß unterzogen, bei dem sie mit Hilfe eines Raffdorns in Falten zu einer Raffraupe gelegt werden, so dass die Länge der Raupe drastisch reduziert wird. Das Raffen eines schlauchförmigen Materials ist beispielsweise aus DE 89 44 623 C2 bekannt.

Die Flexibilität der polyamidbasierten Schlauchfolien im trockenen Zustand reicht nicht aus, um sie faltenfrei zu füllen und um nach dem Koch- bzw. Brühprozess noch genügend Schrumpfeigenschaften aufzubringen, so dass eine glatte, faltenfreie Wurst entsteht. Aus diesem Grund wird der polyamidhaltige Schlauch kurz vor der Füllung mit Fleisch oder mit Wurst in kaltes und auch warmes Wasser getaucht bzw. gewässert. Diese Vorgehensweise wird unter anderem in DE 3426723 beschrieben.

In EP 0 248 860 wird beschrieben, dass die gerafften Schlauchfolien infolge von zum Beispiel unterschiedlichem Auftrag von Raffschmiermittel eine unterschiedliche Wasseraufnahme beim Wässern besitzen und es somit zu unterschiedlichen Elastizitäten der Schlauchfolie innerhalb der Raupe kommt, die zugleich mit Kaliberschwankungen beim Füllen einhergeht. Aus diesem Grund wird eine Vorbefeuchtung der Schlauchfolie vor dem Raffen in der Weise durchgeführt, dass die Schlauchfolie mit einer Innenblase aus Wasser umgewickelt wird. Das hat den Nachteil der nicht gleichmäßigen Befeuchtung über der Rollenlänge, weil die Menge des Wassers mit der Rollenlänge abnimmt.

In EP 0640 289 wird eine geraffte, füllfertige konditionierte Nahrungsmittelhülle beschrieben, die beim Raffen mit einem Gemisch (Emulsion) aus Wasser und Raffschmiermittel besprüht wird, wobei die Herstellung und die Gleichmäßigkeit der Versprühbarkeit mit besonderen Schwierigkeiten verbunden ist.

In EP 0 815 732 wird ein füllfertiger Darm beschrieben, der vor dem Raffen mit einer Sprühlösung besprüht wird, die mit einem Emulgator eine Substanz zur Einstellung des pH-Werts, beispielsweise Kaliumsorbat, ein Bakterizid und ein Gleitmittel verbindet. Als Nachteil ist die aufwendige Herstellung der Emulsion anzusehen.

Es bestand daher die Aufgabe einen füllfertige, geraffte Schlauchfolie mit einem großem Kompressionsverhältnis bereit zustellen, die in einfacher Weise so konditioniert ist, dass sie beim Verarbeiter nicht zusätzlich gewässert werden muß und eine hohe Kaliberkonstanz beim Füllprozess und einen sicheren Maschinenablauf beibehält.

Gelöst wurde diese Aufgabe durch die Bereitstellung einer Schlauchfolie, die biaxial gereckt, mindestens dreischichtig aufgebaut, schrumpfbar und auf beiden Seiten (innen und außen) eine polyamidbasierte und in der Mine eine wassersperrenden Schicht besitzt, zwischen Innenschicht und/oder Außenschicht und Mittelschicht gegebenenfalls vorzugsweise eine oder auch mehrere weitere Schicht(en) aufweisen kann und mittels einer vorangegangenen Sprühbefeuchtung und einer Raffung füllfertig konditioniert ist.

Überraschenderweise hat sich bei den erfindungsgemäßen Schlauchfolien gezeigt, dass es durch besondere Sprühbefeuchtungsbedingungen auch mit einem einfach aufgebauten Sprühmittel zu hervorragenden Verarbeitungseigenschaften beim Raffen und beim Füllen im Falle der bevorzugten Anwendung als Kunstdarm kommt.

Die Spühbefeuchtung wird erfindungsgemäß in der Weise durchgeführt, dass das zur Befeuchtung verwendete Sprühmedium, vorzugsweise Wasser, welches gegebenenfalls zusätzlich ein übliches Fungizid (z.B. quartäre Ammoniumcloridverbindungen wie sie unter dem Handelsnamen Sokrena von der Bode Chemie angeboten werden) und/oder übliche Konservierungsmittel (z.B. Natriumsalze, Hersteller: Merck) enthalten kann, mit einer Tröpfchengröße von 0,01 bis 0,5 mm, vorzugsweise 0,05 bis 0,1 mm, auf der Außenseite, vorzugsweise auf beiden Seiten der flachgelegten Schlauchfolie während des Durchlaufs durch eine handelsübliche Umrollmaschine (z.B. von Firma Küko oder von Firma Eichel) aufgebracht wird. Die Menge des aufgebrachten Sprühmediums wird dabei, vorzugsweise durch die Anordnung der Sprüheinrichtung und die Geschwindigkeit des Umrollvorgangs, so eingestellt, dass höchstens eine Menge an Sprühmittel aufgebracht wird, die der Sättigungsgrenze der außenliegenden Polyamidschicht entspricht. In der weiteren, speziellen Ausführungsform der Erfindung kann neben dem Aufbringen des Sprühmittels im gleichen Arbeitsgang mit einer anderen Vorrichtung noch zusätzlich Raffschmiermittel, z.B. Triglycerid-Gemische, auf die Schlauchfolie übertragen werden.

Die umgerollte Schlauchfolie wird anschließend vorzugsweise in aufgerolltem Zustand in einer Weise gelagert, die keinen Feuchtigkeitsaustausch mit der Umgebung zuläßt, beispielsweise in einem Beutel aus Polyethylen mit einer Wandstärke von ca. 100 µm, bis das Sprühmedium soweit eingezogen ist, dass auf der Oberfläche keine Füssigkeitstropfen mehr zu erkennen sind. Die dazu erforderliche Lagerzeit beträgt in der Regel mindestens 24 Stunden.

Die erfindungsgemäß befeuchtete Schlauchfolie läßt sich mit einem sehr viel höherem Kompressionsverhältnis raffen als nicht befeuchtete Schlauchfolie. Das Kompressionsverhältnis, d.h. das Verhältnis aus Rafflänge der ungerafften Schlauchfolie zu Raffraupenlänge kann von < 50 auf über 100 gesteigert werden. Außerdem sind sowohl im ungefüllten als auch im gefüllten Zustand kaum noch Raffalten zu sehen und als Oberfächenmarkierung zu tasten, wobei die Verbesserung sowohl bei der Axialraffung als auch bei der Schraubenraffung erzielt wird. Die Kaliberkonstanz der gefüllten Wurst wird deutlich erhöht und der Füllvorgang am Füllautomaten kann wesentlich störungsfreier durchgeführt werden.

Die polyamidbasierten Schichten der erfindungsgemäßen Schlauchfolien enthalten als wesentlichen Bestandteil vorzugsweise ein lineares aliphatisches Polyamid (PA) ausgewählt aus PA 6, PA 66, PA 11, PA 12, und/oder lineares, aliphatisches Copolyamid ausgewählt aus PA 6.66, PA 4.6, PA 6.6, PA 6.8, PA 6.9, PA 6.10, PA 6.11, PA 6.12 oder eine Mischung der vorgenannten Polyamide und/oder Copolyamide und können zusätzlich übliche Hilfsstoffe in üblichen Mengen enthalten. Dem Polyamid, Copolyamid oder den Mischungen können außerdem Anteile von aromatischen Polyamid bzw. teilaromatischen Polyamid zugemischt werden, um z.B. die Verarbeitung oder die Barriereeigenschaften der Hülle zu verbessern. Schlauchfolien, insbesondere Kunstdärme, die sich zur Herstellung der erfindungsgemäßen gerafften, füllfertig konditionierten Schlauchfolien eignen, sind beispielsweise unter der Bezeichnung Walsroder® K flex oder Walsroder® K plus (Wolff Walsrode AG) im Handel.

Die wassersperrende Schicht in der Mitte und gegebenenfalls weitere wassersperrende Schichten bestehen im wesentlichen vorzugsweise aus einem oder mehreren Polyolefinen mit wasserdampfsperrendem Charakter, wie insbesondere Polyethylen oder Polypropylen oder Polybuten oder deren Copolymere, die zur Erreichung einer verbesserten Verbundhaftung zusätzlich endgruppenmodifiziert sein können, oder auch sogenannten Ionomerpolymeren wie insbesondere Zn-Ionomeren aus Ethylen-Acrylsäure-Copolymeren und können zusätzlich übliche Hilfsstoffe in üblichen Mengen enthalten können.

Die Schlauchfolien können zusätzlich zur Verringerung von Vergrauungseffekten und zur Erhöhung der Lagerungszeit der fertigen Würste neben der wassersperrenden Schicht mindestens eine weitere Schicht mit sauerstoffsperrendem Charakter aufweisen. Diese sauerstoffsperrenden Schichten bestehen vorzugsweise im wesentliehen aus verseiftem Ethylenvinylacetat oder Mischungen daraus mit anderen Polymeren.

### Beispiele und Vergleichsbeispiele

Die unten angeführten Prüfungen wurden mit den nachfolgenden Beispielen durchgeführt:

### Kompressionverhältnis Einheit (m/m)

Das Kompressionverhältnis stellt wie oben bereits erwähnt das Verhältnis der Länge des gerafften Darm vor der Raffung zu der Länge der Raffraupe bei gegebenem Raffrohrdurchmesser dar. Beispiel: Bei einem Darm mit Kaliber 60 mm ; Raffdorn 40 mm, Länge geraffter Darm = 30m und Länge Raffraupe = 0,42 m beträgt das Kompressionsverhältnis 30/0,42 m/m = 71 m/m

### Biegesteifigkeit:

Unter Biegsteifigkeit wird die Kraft verstanden, die von der Raffraupe entgegensetzt wird, um von ihrer geraden Form in eine geknickte oder sonst von der geraden Form abweichende Form überführt zu werden. Dieses Prüfung kann vorteilhafterweise nur bei Schraubenraffung angewendet werden. Eine Bewertung wurde qualitativ auf einer Skala 1 bis 5 nach dem Bewertungsmaßstab 1 = große Kraft und 5 = äußerst kleine Kraft durchgeführt.

### Beurteilung der Raffalten: (Rauigkeit der fertigen Wurst)

Durch die extrem hohe mechanische Belastung der Darms beim Raffprozess bilden sich sogenannte Raffalten, die teilweise noch bei der fertigen Wurst zu sehen sind. Eine Beurteilung wurde auf einer Skala von 1 = nicht sichtbare Raffaltenausprägung bis 5 = starke Raffaltenausprägung durchgeführt.

### Kaliberkonstanz:

Von großer Bedeutung für den industriellen Anwender ist die geometrische Gleichförmigkeit der Wurstprodukte, die sich unter anderem an einem gleichmäßigen Durchmesser der Produkte feststellen läßt. Für die Beurteilung wurde eine Skala von 1 = +/- 0,1 mm Kalibertoleranz bis 5 = +/- 0,5 mm Kalibertoleranz zugrunde gelegt, wobei der Durchmesser in der Mitte der ca. 25 cm langen Würste gemessen wurde.

### Füllverhalten:

Unter Füllverhalten wird die Sicherheit verstanden, mit der der Darm unter Vermeidung von Platzern oder sonstigen Störungen gefüllt werden kann. Eine Beurteilung wurde nach dem Bewertungsmaßstab von 1 = keine Störung innerhalb von 100 Raupen bis 5 = mindestens 5 Störungen innerhalb von 100 Raupen durchgeführt.

### Beispiele:

Die folgenden Beispiele und Vergleichsbeispiele sollen die Erfindung verdeutlichen:

Die unterschiedlichen in erfindungsgemäß hergestellten Hüllen und in den Vergleichsbeispielen eingesetzten Polymere werden wie folgt abgekürzt:

| | | |
|---|---|---|
| PA | Polyamid 6 | z.Bsp.: Durethan B 40 F (Bayer AG) |
| PO-HV | Propylen-basiernder Copolymer-Haftvermittler | z.Bsp.: Bynel E 379 (Du Pont) |
| XX | Ethylen-Vinylalkohol-Copolymer | z. Bsp.: EVAL LC F 101 BZ (Kuraray) |
| aPA | teilaromatisches Copolyamid | z. Bsp.: Selar PA 3426 (Du Pont) |
| MB | Masterbatch auf Basis Polyamid 6 | z. Bsp.: Farbmasterbatch PA gold |

### Beispiel 1 (B1):

Das Handelsprodukt Walsroder® K plus SK Nennkaliber 60 mm (Hersteller Wolff Walsrode AG, Walsrode) wird erfindungsgemäß mit 8% Gesamtgewichtszunahme sprühbefeuchtet und nach einer Wartezeit von 24 Stunden auf einer Axialraffmaschine mit einem Raffrohrdurchmesser von 40 mm auf 50 m bei einer Raupenlänge von 420 mm mit einem Raffschmiermittel gerafft. Ohne weitere Wässerung wurde dieser Darm gefüllt.

### Vergleichsbeispiel 1.1. (VB1.1):

Der in Beispiel 1 verwendete Darm wird ohne Befeuchtung auf einer Axialraffmaschine mit einem Raffrohrdurchmesser von 40 mm auf 25 m bei einer Raupenlänge von 420 mm mit einem Raffschmiermittel gerafft.

Er wurde nach den Herstellerangaben (z.B. 30 Minuten im handwarmem Wasser) gewässert und gefüllt.

### Beispiel 2 (B2):

Das Handelsprodukt Walsroder® K flex rot Nennkaliber 60 mm (Hersteller Wolff Walsrode AG, Walsrode) wird erfindungsgemäß mit 6% Gesamtgewichtszunahme sprühbefeuchtet und nach einer Wartezeit von 24 Stunden auf einer Schraubenraffmaschine mit einem Raffrohrdurchmesser von 40 mm auf 60 m bei einer Raupenlänge von 420 mm mit einem Raffschmiermittel gerafft. Ohne weitere Wässerung wurde dieser Darm gefüllt

### Vergleichsbeispiel 2 (VB2):

Der in Beispiel 2 verwendete Darm wird ohne Befeuchtung auf einer Schraubenraffmaschine mit einem Raffrohrdurchmesser von 40 mm auf 25 m bei einer Raupenlänge von 420 mm mit einem Raffschmiermittel gerafft.

Er wurde nach den Herstellerangaben (z.B. 30 Minuten im handwarmem Wasser) gewässert und gefüllt.

### Vergleichsbeispiel 3 (VB3.1):

Ein dreischichtiger Kunststoffdarm wurde über das Schlauchreckverfahren hergestellt. Der Darm hatte dann ein Nennkaliber von 60 mm und eine Gesamtdicke von 45 µm.
- Der Schichtaufbau ist:: (innen) PA / Copolyamid / PA (außen)
- Dickenprofil:: (µm) (innen) 10 /10 / 25 (außen)

Dieser Darm wird in oben beschriebener Weise mit 6% Gesamtgewichtszunahme sprühbefeuchtet und nach einer Lagerzeitzeit von 24 Stunden auf einer Axialraffmaschine mit einem Raffrohrdurchmesser von 40 mm auf 60 m bei einer Raupenlänge von 420 mm mit einem Raffschmiermittel gerafft. Ohne weitere Wässerung wurde dieser Darm gefüllt.

### Vergleichsbeispiel 3 (VB3.2):

Wie in VB3.1 aber unbefeuchtet mit 30 in auf 420 mm Raupenlänge gerafft und vor dem Füllen 30 Minuten gewässert.

### Beispiel 4 (B4):

Ein fünfschichtiger Kunststoffdarm wurde über das Schlauchreckverfahren hergestellt. Der Dann hat dann ein Nennkaliber von 60 mm und eine Gesamtdicke von 55 µm.
- Der Schichtaufbau ist:: (innen) PA / PA + MB + aPA / PO-HV / PA + MB + aPA / PA (außen)
- Dickenprofil:: (µm) (innen) 5 /20 1 5/20 / 5 (außen)

Dieser Darm wird erfindungsgemäß mit 6% Gesamtgewichtszunahme sprühbefeuchtet und nach einer Wartezeit von 24 Stunden auf einer Axialraffmaschine mit einem Raffrohrdurchmesser von 40 mm auf 60 m bei einer Raupenlänge von 420 mm mit einem Raffschmiermittel gerafft. Ohne weitere Wässerung wurde dieser Darm gefüllt.

### Beispiel 5:

Ein fünfschichtiger Kunststoffdarm wurde über das Schlauchreckverfahren hergestellt. Der Darm hat dann ein Nennkaliber von 60 mm und eine Gesamtdicke von 41 µm.
- Der Schichtaufbau ist:: (innen) PA / PO-HV / XX / PA + aPA / PA + MB (außen)
- Dickenprofil:: (µm) (innen) 8 /4 / 3 /20 / 6 (außen)

Dieser Darm wird erfindungsgemäß mit 6% Gesamtgewichtszunahme sprühbefeuchtet und nach einer Wartezeit von 24 Stunden auf einer Schraubenraffmaschine mit einem Raffrohrdurchmesser von 40 mm auf 50 m bei einer Raupenlänge von 420 mm mit einem Raffschmiermittel gerafft. Ohne weitere Wässerung wurde dieser Darm gefüllt.

Das Ergebnis der Prüfungen ist in nachfolgender Tabelle zusammengestellt:

| **Muster** | | **B1** | **VB1.1** | **B2** | **VB 2** | **VB3.1** | **VB3.2** | **B4** | **B5** |
|---|---|---|---|---|---|---|---|---|---|
| Nennkaliber | | 60 | 60 | 60 | 60 | 60 | 60 | 60 | 60 |
| Kompressionsverhältnis beim Raffen | (m/m) | 119 | 60 | 143 | 60 | 143 | 71 | 143 | 119 |
| Biegesteifigkeit der Raffraupe | Note | - | - | 1 | 5 | - | - | - | - |
| Beurteilung der Raffalten (Rauigkeit) im gefüllten Zustand | Note | 1 | 4 | 1 | 3 | 4 | 3 | 1 | 1 |
| Füllkaliber | mm | 62 | 62 | 62 | 62 | 62 | 62 | 62 | 62 |
| Kaliberkonstanz der Würste | Note | 1 | 4 | 1 | 3 | 3 | 3 | 1 | 1 |
| Füllverhalten an der Füllmaschine | Note | 1 | 4 | 1 | 4 | 4 | 1 | 2 | 1 |

## Patentansprüche

1. Geraffte, füllfertig konditionierte, biaxial gereckte, mindestens dreischichtig aufgebaute, schrumpfbare Schlauchfolie, die innen und außen eine polyamidbasierte und in der Mitte eine wassersperrende Schicht besitzt und vor der Raffung auf der Außenseite mit feinen Tröpfchen eines Sprühmediums mit einer Tröpfchengröße von 0,01 - 0,5 mm in einer Menge sprühbefeuchtet wurde, die höchstens der Sättigungsgrenze der außenliegenden Polyamidschicht entspricht, und anschließend ohne Feuchtigkeitsaustausch mit der Umgebung gelagert wurde, bis das Sprühmedium in die Außenschicht eingezogen ist.

2. Schlauchfolie gemäß Anspruch 1, dadurch gekennzeichnet, dass es sich bei dem Sprühmedium um Wasser handelt, welches gegebenenfalls zusätzlich ein übliches Fungizid und/oder übliche Konservierungsmittel enthalten kann.

3. Schlauchfolie gemäß Anspruch 1 oder 2, dadurch gekennzeichnet, dass die polyamidbasierten Schichten im wesentlichen aus linearem aliphatischem Polyamid (PA) ausgewählt aus PA 6, PA 66, PA 11, PA 12, und/oder linearem, aliphatischem Copolyamid ausgewählt aus PA 6.66, PA 4.6, PA 6.6, PA 6.8, PA 6.9, PA 6.10, PA 6.11, PA 6.12 oder einer Mischung der vorgenannten Polyamide und/oder Copolyamide bestehen.

4. Schlauchfolie gemäß einem der Ansprüche 1 bis 3, dadurch gekennzeichnet, dass die wassersperrende Schicht im wesentlichen aus einem oder mehreren Polyolefinen mit wasserdampfsperrendem Charakter besteht.

5. Schlauchfolie einem der Ansprüche 1 bis 4, dadurch gekennzeichnet, dass sie mindestens eine weitere Schicht mit sauerstoffsperrendem Charakter aufweist.

6. Verfahren zur Herstellung einer füllfertig konditionierten Schlauchfolie gemäß einem der Ansprüche 1, 3, 4 oder 5, dadurch gekennzeichnet, dass eine biaxial gereckte, mindestens dreischichtig aufgebaute, schrumpfbare Schlauchfolie, die innen und außen eine polyamidbasierte und in der Mitte eine wassersperrenden Schicht besitzt, vor der Raffung während des Durchlaufs durch eine handelsübliche Umrollmaschine ein Sprühmedium mit einer Tröpfchengröße von 0,01 - 0,5 mm auf beiden Seiten der Schlauchfolie in einer Menge aufgebracht wird, die höchstens der Sättigungsgrenze der außenliegenden Polyamidschicht entspricht, und die umgerollte Schlauchfolie anschließend in aufgerolltem Zustand in einer Weise gelagert wird, die keinen Feuchtigkeitsaustausch mit der Umgebung zuläßt, bis das Sprühmedium soweit eingezogen ist, dass auf der Oberfläche der Schlauchfolie keine Füssigkeitstropfen mehr zu erkennen sind

7. Verfahren nach Anspruch 6, dadurch gekennzeichnet, dass das zur Befeuchtung verwendete Sprühmedium Wasser ist, welches gegebenenfalls zusätzlich ein übliches Fungizid oder übliche Konservierungsmittel enthalten kann.

8. Verfahren nach Anspruch 6 oder 7, dadurch gekennzeichnet, dass die Tröpfchengröße des Sprühmediums 0,05 bis 0,1 mm beträgt.

9. Verfahren nach einem der Ansprüche 6 bis 8, dadurch gekennzeichnet, dass die Aufbringung des Sprühmediums auf beiden Seiten der flachgelegten Schlauchfolie erfolgt.

10. Verfahren nach einem der Ansprüche 6 bis 9, dadurch gekennzeichnet, dass während des Umrollens neben dem Aufbringen des Sprühmediums im gleichen Arbeitsgang mit einer anderen Vorrichtung noch zusätzlich Raffschmiermittel auf der Schlauchfolie übertragen wird.

11. Verwendung einer Schlauchfolie gemäß einem der Ansprüche 1 bis 5 als Kunstdarm zur Herstellung von Wurst.
